# EUROPÄISCHE PATENTSCHRIFT

(11) **EP 4 141 268 B1**
(45) Veröffentlichungstag und Bekanntmachung des Hinweises auf die Patenterteilung: **19.02.2025**
(21) Anmeldenummer: 22164412.3
(22) Anmeldetag: 25.03.2022
(51) Int. Cl.: F16B 11/00

(54) **VERFAHREN UND SYSTEM ZUM BESCHICHTEN EINES METALLISCHEN TRÄGERPROFILS MIT EINER SCHICHT AUS EINEM KORROSIONSRESISTENTEN MATERIAL**
METHOD AND SYSTEM FOR COATING A METALLIC SUPPORT PROFILE WITH A LAYER OF A CORROSION RESISTANT MATERIAL
PROCÉDÉ ET SYSTÈME DE REVÊTEMENT D'UN PROFILÉ DE SUPPORT MÉTALLIQUE DOTÉ D'UNE COUCHE D'UNE MATIÈRE RÉSISTANTE À LA CORROSION

(30) Priorität: 27.08.2021 DE 102021122287
(43) Veröffentlichungstag der Anmeldung: 01.03.2023
(73) Patentinhaber: Premium AEROTEC GmbH, 86179 Augsburg (DE)
(72) Erfinder: MÄNNICH, Ralph, 86179 Augsburg (DE); STIEGELMEYR, Manuel, 86179 Augsburg (DE); BENSCH, Matthias, 86179 Augsburg (DE); GEIPEL, Thomas, 86179 Augsburg (DE); DALLINGER, Kilian, 86179 Augsburg (DE)
(74) Vertreter: LKGLOBAL Lorenz & Kopf Patentanwalt Attorney at Law PartG mbB

(56) Entgegenhaltungen:
- DE-A1- 102017 208 038
- DE-A1- 4 112 607
- JP-A- 2004 244 652

## Beschreibung

### Technisches Gebiet

Die vorliegende Beschreibung betrifft ein Verfahren zum Beschichten eines metallischen Trägerprofils mit einer Schicht aus einem korrosionsresistenten Material sowie ein System zum Beschichten eines metallischen Trägerprofils mit einer Schicht aus einem korrosionsresistenten Material.

### Technischer Hintergrund

In Flugzeugen, insbesondere Verkehrsflugzeugen für den Transport von Personen, sind Einbauten und Systeme unterschiedlichsten Einflüssen ausgesetzt, für die sie entsprechend angepasst werden. Beispielsweise sind in der Kabine eines Verkehrsflugzeugs verschiedene Arten von Schienen angeordnet, die zum strukturseitigen Befestigen von Sitzen und Monumenten dienen und im laufenden Flugbetrieb hohen Anforderungen unter anderem in Form von Korrosion ausgesetzt sind. Aktuell bestehen hierbei eingesetzte Profilstrukturen entweder aus Aluminium- oder Titanlegierungen. Dabei zeichnen sich Aluminiumschienen in der Anschaffung dadurch aus, dass sie verhältnismäßig günstig sind. Aufgrund des geringen Widerstands von Aluminium gegen korrosive Einflüsse im Serienbetrieb des Flugzeugs müssen diese jedoch häufig bei Wartungsarbeiten getauscht werden, was mit hohen zusätzlichen Kosten einhergeht. Bei Schienen aus Titan verhält es sich indes genau umgekehrt. Dabei sind die Herstellungskosten für Schienen aus Titan etwa 8-20-mal höher als für die alternativen Schienen aus Aluminium.

Die JP 2004 244 652 A beschreibt ein Verfahren zur einfachen Verhinderung der Korrosion einer Stahlkonstruktion unter Verwendung von Kohlenstoffstahl oder ähnlichem. Eine korrosionsbeständige Metallfolie wird mit Hilfe eines elektrisch isolierenden Klebstoffs auf die gesamte oder einen Teil der Oberfläche einer Stahlkonstruktion oder einer beschichteten Oberfläche derselben geklebt. Für die korrosionsbeständige Metallfolie kann eine Titanfolie mit einer Dicke von 0,02-0,20 mm verwendet werden, und für den Klebstoff können ein Harz auf Epoxidbasis, ein Harz auf Urethanbasis und ein Harz auf Harnstoffbasis verwendet werden. Ein Acrylharz wird auf beide Seiten einer Butylkautschukplatte aufgetragen, ein Trennpapier wird auf einer Seite auf das Acrylharz geklebt, und ein Korrosionsschutzblatt mit einer darauf geklebten korrosionsbeständigen Metallfolie wird auf dem Acrylharz auf der anderen Seite vorbereitet. Das Trennpapier der Korrosionsschutzfolie wird bei der Ausführung abgezogen und entfernt, und wenn diese Oberfläche mit dem abgezogenen und entfernten Trennpapier auf die Stahloberfläche geklebt wird, kann die korrosionsbeständige Metallfolie darauf geklebt werden. Nachdem die Metallfolie auf die Oberfläche geklebt wurde, kann Farbe sowohl auf einen Teil mit Haftung als auch auf einen Teil ohne Haftung vollständig aufgetragen werden.

Die DE 10 2017 208 038 A1 beschreibt ein Verfahren zum blasenfreien Aufbringen eines flächigen Substrats (109) auf eine Oberfläche eines Werkstücks (114). Das Werkstück (114) und das flächige Substrat (109) werden in einer mit einer Unterdruckquelle verbindbaren Unterdruckkammer (100) eines Presswerkzeugs (100) positioniert. Das flächige Substrat (109) wird mit einem Pressmittel (106) auf die Oberfläche gepresst, wobei die Unterdruckkammer (100) vor dem Pressen des flächigen Substrats (109) auf die Oberfläche des Werkstücks (114) mit einem Unterdruck von ≤ 500 mbar beaufschlagt wird. Ein zur Durchführung des Verfahrens als geeignet beschriebenes Presswerkzeug (100) umfasst eine Unterdruckkammer (100), in der das Werkstück (114) und das flächige Substrat (109) positioniert werden können, einschließlich eines Deckels (105) zum Öffnen und druckdichten Verschließen der Unterdruckkammer (100), sowie ein durch den Deckel (105) geführtes oder in den Deckel (105) integriertes Pressmittel (106) zum Pressen des flächigen Substrats (109). Weiterhin umfasst es Positionierungselemente (110, 111, 112) zur Positionierung des flächigen Substrats (109) in der Unterdruckkammer (100) in Beabstandung von dem Werkstück.

Die DE 41 12 607 A1 beschreibt ein Verfahren zur Beschichtung einer profilierten Oberfläche eines plattenförmigen Werkstücks mit einem flexiblen flächigen Beschichtungsmaterial, wie einem Furnier, einem Dekorpapier oder dergleichen. Das Verfahren umfasst die folgenden Schritte: Auflegen des Werkstücks auf eine Pressplatte, wobei sich über dem Werkstück und/oder dem Beschichtungsmaterial eine Leimschicht befindet; Absenken einer unbeheizten Vorformmembran auf das Beschichtungsmaterial; Evakuieren des Raumes zwischen der Vorformmembran und der unteren Pressplatte; Absenken einer beheizten, elastisch dehnbaren Pressmembran auf die Vorformmembran, und Beaufschlagen der Pressmembran mit Druck.

### Beschreibung

Es kann als Aufgabe betrachtet werden, eine alternative Realisierung einer Schiene für ein Luftfahrzeug vorzuschlagen, bei dem eine kostengünstige Herstellung bzw. ein kostengünstiger Einsatz möglich ist und zu einem sehr effektiven Korrosionsschutz führt.

Diese Aufgabe wird gelöst durch den Gegenstand des unabhängigen Anspruchs 1. Weitere Ausführungsformen ergeben sich aus den abhängigen Ansprüchen sowie aus der folgenden Beschreibung.

Gemäß einem ersten Aspekt der Erfindung wird ein Verfahren zum Beschichten eines metallischen Trägerprofils mit einer Schicht aus einem korrosionsresistenten Material vorgeschlagen, aufweisend Bereitstellen des metallischen Trägerprofils mit einer zu beschichtenden Fläche, Bereitstellen eines auf die zu beschichtende Fläche angepassten Schichtelements aus dem korrosionsresistenten Material, Aufbringen eines adhäsiven, aushärtbaren Stoffs auf mindestens einen der zu beschichtenden Fläche und des Schichtelements, Aufbringen des Schichtelements auf die zu beschichtende Fläche, Abdecken der Anordnung aus Trägerprofil und Schichtelement durch ein Kompaktierelement, Aufpressen des Schichtelements auf die zu beschichtende Fläche mittels des Kompaktierelements zum Erzielen einer vorbestimmten, durch den adhäsiven Stoff eingenommenen Fugenstärke, Aushärten des adhäsiven Stoffs bei Beibehaltung der Fugenstärke zum Generieren eines Verbundes, und Entfernen des Kompaktierelements. Das Bereitstellen des Trägerprofils umfasst ferner das Haltern des Trägerprofils in einer Aufnahme, wobei das Abdecken durch ein Kompaktierelement das Abdecken durch eine gasundurchlässige Membran umfasst, die mit der Aufnahme oder einem darüber angeordneten Deckel abdichtend verbunden wird, und wobei das Aufpressen des Schichtelements ein Evakuieren eines Zwischenraums zwischen der Aufnahme und der Membran bzw. eine Druckerhöhung in einem Zwischenraum zwischen der Membran und dem Deckel umfasst. Das Verfahren gemäß dem ersten Aspekt umfasst ferner mindestens einen der folgenden Schritte: Auflegen eines gasdurchlässigen, zumindest biegeweichen Flächenelements auf die Anordnung aus Trägerprofil und Schichtelement; und Auflegen einer Folie auf die Anordnung aus Trägerprofil und Schichtelement zum Erhöhen von Gleiteigenschaften der Membran.

Gemäß einem zweiten Aspekt der Erfindung wird ein Verfahren zum Beschichten eines metallischen Trägerprofils mit einer Schicht aus einem korrosionsresistenten Material vorgeschlagen, aufweisend Bereitstellen des metallischen Trägerprofils mit einer zu beschichtenden Fläche, Bereitstellen eines auf die zu beschichtende Fläche angepassten Schichtelements aus dem korrosionsresistenten Material, Aufbringen eines adhäsiven, aushärtbaren Stoffs auf mindestens einen der zu beschichtenden Fläche und des Schichtelements, Aufbringen des Schichtelements auf die zu beschichtende Fläche, Abdecken der Anordnung aus Trägerprofil und Schichtelement durch ein Kompaktierelement, Aufpressen des Schichtelements auf die zu beschichtende Fläche mittels des Kompaktierelements zum Erzielen einer vorbestimmten, durch den adhäsiven Stoff eingenommenen Fugenstärke, Aushärten des adhäsiven Stoffs bei Beibehaltung der Fugenstärke zum Generieren eines Verbundes, und Entfernen des Kompaktierelements.

Das Bereitstellen des metallischen Trägerprofils mit der zu beschichtenden Fläche kann das Erzeugen, Beschaffen und/oder Vorbereiten des Trägerprofils umfassen. Das Trägerprofil könnte aus Aluminium oder einem anderen metallischen Material bestehen, welches durch eine zusätzliche Beschichtung mit einem verbesserten Korrosionsschutz zu versehen ist. Das Trägerprofil könnte bei der Bereitstellung bereits mit einer geeigneten Abmessung versehen sein, sodass die Beschichtung mit dem korrosionsresistenten Material auf einem endgültig geformten Trägerprofil erfolgt. Es ist allerdings auch denkbar, einen notwendigen Zuschnitt oder eine Anpassung erst nach der Beschichtung durchzuführen. Das Bereitstellen kann weiterhin auch das Haltern des Trägerprofils zur anschließenden Bearbeitung umfassen. Das Trägerprofil ist bevorzugt ein längliches bzw. stabförmiges Werkstück, das einen gleichbleibenden Querschnitt aufweist. Der Querschnitt weist bevorzugt zwei oder mehr winklig zueinander stehende Hauptflächen auf. Beispielsweise weist der Querschnitt des Trägerprofils einen oder mehrere Gurte und einen oder mehrere Stege auf. Das Trägerprofil könnte auch ein Hohlprofil sein. Beispielhaft umfasst das Trägerprofil einen unteren Gurt auf, sowie einen in einem Abstand dazu angeordneten oberen Gurt, wobei eine Oberfläche des oberen Gurts, die von dem unteren Gurt beabstandet ist, zu beschichten ist. Das Trägerprofil besteht insbesondere aus einer Aluminiumlegierung. Beispielhaft ist das Trägerprofil eine Sitzschiene für eine Flugzeugkabine oder eine Installationsschiene für Kabineneinbauten.

Das anschließende Bereitstellen eines auf die zu beschichtende Fläche angepassten Schichtelements aus dem korrosionsresistenten Material kann das Anpassen des Schichtelements an die gewünschten Abmessungen umfassen. Dies könnte etwa durch Schneiden eines entsprechenden Werkstücks erfolgen. Das Schichtelement könnte indes auch dazu ausgebildet sein, dass es ohne weitere Anpassarbeiten auf der zu beschichtenden Fläche anbringbar ist und dort die vorgesehene Funktion erfüllt. Die vor Aufbringen des Schichtelements vorliegenden Dimensionen könnten folglich den erforderlichen Dimensionen entsprechen, sodass nach Aufbringen des Schichtelements die Beschichtung die gewünschten Maße aufweist.

Das Schichtelement kann ein metallisches Blech aufweisen, das eine geringe Dicke besitzt. Das Schichtelement könnte insbesondere eine dünne Metallfolie, insbesondere ein Titanblech bzw. eine Titanfolie sein. Die Dicke des Blechs könnte deutlich unterhalb eines Millimeters liegen, beispielsweise in einem Bereich von 0,002 bis 0,25 mm. Alternativ dazu könnten auch nichtmetallische Folien eingesetzt werden.

Das Aufbringen des adhäsiven, aushärtbaren Stoffs auf mindestens einen der zu beschichtenden Fläche und des Schichtelements kann das Auftragen eines flüssigen oder pastösen Stoffs umfassen. Das Auftragen kann durch Sprühen, Spritzen, Rollen, Streichen, Rakeln oder andere Prozesse erreicht werden. Der Stoff könnte eine im Flugzeugbau übliche Dichtmasse sein, die sich durch eine hohe Zähigkeit auszeichnet. Weiterhin ist denkbar, einen aushärtbaren Stoff in Form eines zunächst festen, zusammenhängenden und in gewissen Grenzen formstabilen Schichtstoffs auf die zu beschichtende Fläche aufzulegen und durch eine spätere Einwirkung während des Verfahrens vernetzungsfähig zu machen, sodass dann eine Aushärtung erfolgen kann. Dies kann das Zusetzen eines Lösungsmittels, das Aufwärmen oder andere Prozesse umfassen.

Anschließend wird das Schichtelement auf die zu beschichtende Fläche aufgebracht, beispielsweise aufgelegt. Je nach Größe und Form des Trägerprofils kann es sinnvoll sein, das Schichtelement von einer Art Spule abzurollen und dabei kontinuierlich auf die betreffende Fläche aufzulegen. Es ist weiterhin denkbar, das Schichtelement durch eine Greif- oder Haltevorrichtung zu handhaben und auf der betreffenden Fläche zu positionieren. Es könnten sich hierbei Vakuumvorrichtungen mit Saugnäpfen anbieten, die durch Anlegen eines Vakuums eine kraftschlüssige Verbindung mit dem Schichtelement hervorrufen können.

Das Kompaktierelement ist ein mechanisches Element, das durch seine Abmessungen und Form in der Lage ist, die Anordnung aus Trägerprofil und Schichtelement abzudecken. Das Schichtelement kann durch das Kompaktierelement auf die zu beschichtende Fläche gepresst werden, wobei hierzu ein flächiger Kontakt zwischen dem Schichtelement und dem Kompaktierelement besonders vorteilhaft ist. Damit wird ein gleichmäßiger Druck auf das Schichtelement erwirkt. Das Kompaktierelement ist bevorzugt ein flächiges Element, das insbesondere die Abmessungen der zu beschichtenden Fläche übersteigt. Besonders bevorzugt kann das Kompaktierelement mittels eines auf eine Seite einwirkenden Drucks auf das Schichtelement gepresst werden. Es ist ein Ziel, durch den Vorgang des Anpressens eine vorbestimmte, durch den adhäsiven Stoff eingenommenen Fugenstärke zu verursachen.

Während des Aushärtens des adhäsiven Stoffs wird die Fugenstärke durch Aufrechterhalten eines Anpressdrucks bzw. einer Anpresskraft beibehalten, bis der adhäsive Stoff verfestigt ist. Damit wird ein Verbund zwischen dem Trägerprofil und dem Schichtelement hergestellt. Ist die Aushärtung abgeschlossen, wird das Kompaktierelement wieder entfernt.

Durch das erfindungsgemäße Verfahren wird eine kostengünstige Möglichkeit bereitgestellt, dünne Bleche bzw. Folien aus korrosionsbeständigem Titan oder anderen Materialien auf ein Trägerprofil zu bringen, das weitgehend beliebig geformt sein kann. Es können unterschiedliche adhäsive Stoffe eingesetzt werden, die an den vorgesehenen Einsatz angepasst sind, beispielsweise im Flugzeugbau üblicherweise genutzte Dichtmassen erfolgen, die sich durch eine hohe Zähigkeit auszeichnen. Dadurch können besonders dünne (0,05 - 0,1mm) und gleichmäßige oder gezielt unterschiedliche Fugendicken auch auf längeren Profilschienen realisiert werden, die Längen von mehreren Metern aufweisen können.

Gemäß dem ersten Aspekt der Erfindung sowie gemäß einer Ausführungsform des zweiten Aspekts der Erfindung umfasst das Bereitstellen des Trägerprofils das Haltern des Trägerprofils in einer Aufnahme, wobei das Abdecken durch ein Kompaktierelement das Abdecken durch eine gasundurchlässige Membran umfasst, die mit der Aufnahme oder einem darüber angeordneten Deckel abdichtend verbunden wird, und wobei das Aufpressen des Schichtelements ein Evakuieren eines Zwischenraums zwischen der Aufnahme und der Membran bzw. eine Druckerhöhung in einem Zwischenraum zwischen der Membran und dem Deckel umfasst. Durch das Haltern des Trägerprofils in der Aufnahme wird seine Position festgelegt. Die gasundurchlässige Membran als Kompaktierelement kann mit der Aufnahme oder dem Deckel einen Zwischenraum bilden, der zum Bereitstellen eines Drucks in Form eines Überdrucks oder eines Vakuums dient. Der Zwischenraum kann mit einer Fördereinheit in Fluidverbindung gebracht werden, wobei die Fördereinheit Luft oder ein anderes Fluid in den Zwischenraum einbläst oder Luft aus diesem entfernt. Über die Fläche der Membran wird dadurch besonders einfach und zuverlässig eine Kraft über eine beliebig große Fläche generiert, die zum Aufpressen des Schichtelements dient. Die Membran wird dadurch gleichmäßig auf die Anordnung aus Schichtelement und Trägerprofil gepresst, was zu einer besonders gleichmäßigen Fugendicke zwischen dem Schichtelement und dem Trägerprofil führt.

In einer weiteren Ausführungsform ist die Membran elastisch dehnbar. Dadurch kann sich die Membran besonders gut an unterschiedliche Formen des Trägerprofils anpassen und lokal dehnen. Eine zum Durchführen des Verfahrens vorgesehene Vorrichtung kann daher völlig flexibel für unterschiedliche Trägerprofile genutzt werden, ohne oder weitgehend ohne Anpassarbeiten vornehmen zu müssen.

Der erste Aspekt Erfindung sowie eine weitere Ausführungsform des zweiten Aspekts der Erfindung könnte ferner Auflegen eines gasdurchlässigen, zumindest biegeweichen Flächenelements auf die Anordnung aus Trägerprofil und Schichtelement aufweisen. Damit wird eine zwischen der Membran und dem Schichtelement verbliebene Luftmenge zuverlässig entfernt, falls ein durch die Membran abgegrenzter Zwischenraum evakuiert wird. Das Flächenelement kann insbesondere ein luftdurchlässiges Gewebe sein.

Gemäß dem ersten Aspekt der Erfindung sowie gemäß einer Ausführungsform des zweiten Aspekts der Erfindung könnte das Verfahren ferner Auflegen einer Folie auf die Anordnung aus Trägerprofil und Schichtelement zum Erhöhen von Gleiteigenschaften der Membran aufweisen. Insbesondere bei größeren Trägerprofilen und folglich bei größeren Membranen kann es nicht ausgeschlossen werden, dass die Membran nicht flächig aufliegt, sondern örtlich Falten oder Wellen ausbildet. Bei der Evakuierung des Zwischenraums wird die Membran gestrafft, indem sie sich an den Grenzen des Schichtelements in Druckrichtung an dem Trägerprofil vorbei gleitet und hierbei eine in der Ebene der Membran wirkende Zugkraft generiert. Zum Ausgleichen ihrer Form gleitet sie auf dem Schichtelement, bis sie schließlich straff ist. Das Auflegen einer Folie mit verbesserten Gleiteigenschaften wird dieser Prozess günstig beeinflusst.

Ferner weist das Verfahren des zweiten Aspekts der Erfindung, sowie einer Ausführungsform des ersten Aspekts der Erfindung, das lokale Anordnen mindestens eines Druckstempels auf der Anordnung aus Trägerprofil und Schichtelement auf, wobei zum lokalen Verringern der Fugenstärke eine zu der Anordnung gewandte Unterseite des mindestens einen Druckstempels einen geringeren Flächeninhalt aufweist als eine zu dem Kompaktierelement gewandte Oberseite des mindestens einen Druckstempels. Durch das Einbringen von Druckstempeln ist eine lokale Druckerhöhung auf die betreffenden Fügepartner möglich. Dies kann etwa zu unterschiedlichen dicken Klebeverbindungen oder zu unterschiedlichen Eigenschaften führen.

Ferner könnte das Verfahren das Einbringen mindestens einer Buchse in eine Bohrung aufweisen, die sich durch die Anordnung erstreckt, wobei die mindestens eine Buchse durch einen des mindestens einen Druckstempels abgedeckt wird. Einsätze in Form der mindestens einen Buchse werden positionsgerecht und definiert eingebracht.

Ein dritter Aspekt der Erfindung betrifft analog dazu ein System zum Beschichten eines metallischen Trägerprofils mit einer Schicht aus einem korrosionsresistenten Material, aufweisend eine Aufnahme zum Haltern des metallischen Trägerprofils mit einer zu beschichtenden Fläche, ein Schichtelement aus dem korrosionsresistenten Material, wobei das Schichtelement an die zu beschichtende Fläche angepasst ist, einen adhäsiven Stoff zum Kleben des Schichtelements an die zu beschichtende Fläche, ein Kompaktierelement, das derart dimensioniert ist, dass es die zu beschichtende Fläche sowie das darauf angeordnete Schichtelement abdecken kann, und eine Antriebseinrichtung, die mit dem Kompaktierelement koppelbar ist und dazu ausgebildet ist, das Kompaktierelement mit einer vorgegeben Kraft und für eine vorgegebene Zeit auf das Schichtelement zu pressen, wobei das Kompaktierelement elastisch verformbar ist, sodass es sich während des Pressens an die Form der Anordnung anpasst. Das System umfasst ferner mindestens eines der folgenden Elemente: ein gasdurchlässiges, zumindest biegeweiches Flächenelement zum Auflegen auf die Anordnung aus Trägerprofil und Schichtelement; eine Folie zum Auflegen auf die Anordnung aus Trägerprofil und Schichtelement zum Erhöhen von Gleiteigenschaften der Membran; und mindestens einen Druckstempel zum Aufbringen auf der Anordnung aus Trägerprofil und Schichtelement, wobei eine zu der Anordnung gewandte Unterseite des mindestens einen Druckstempels eine kleinere Fläche aufweist als eine Fläche auf einer zu dem Kompaktierelement gewandten Oberseite des mindestens einen Druckstempels.

Die Antriebseinrichtung kann eine Vorrichtung sein, die dazu ausgebildet ist das Kompaktierelement auf die Anordnung zu pressen. Wie vorangehend dargestellt kann die Antriebseinrichtung eine Luftfördereinheit umfassen, die das Kompaktierelement einseitig mit einem Druck beaufschlagt, sodass es auf die Anordnung gepresst wird. Es ist jedoch auch möglich, einen oder mehrere Aktuatoren zu verwenden, die auf das Kompaktierelement einwirken.

Dabei kann die Aufnahme gemäß einer Ausführungsform wannenförmig sein und einen Halter zum ortsfesten Halten des Trägerprofils aufweisen. Der Halter kann einen Klemmhalter oder ein anderes profilstrukturtragendes Werkzeug umfassen. Durch eine Wannenform kann das Trägerprofil durch Ränder der Wannenform in Höhenrichtung eingeschlossen werden, sodass die Aufnahme anschließend nur durch eine Membran abgedeckt werden müsste, um den vorangehend genannten Zwischenraum auszubilden. Es kann sinnvoll sein, dann an einer Unterseite der Aufnahme eine Luftfördereinheit anzuordnen, welche direkt mit dem durch die Aufnahme gebildeten Zwischenraum in Fluidverbindung steht.

In einer Ausführungsform könnte das Kompaktierelement eine gasundurchlässige Membran umfassen, die die Aufnahme überspannt, um einen gasdichten Zwischenraum zwischen der Aufnahme und der Membran zu erzeugen, wobei die Antriebseinrichtung eine Fluidpumpe aufweist, die den Zwischenraum mit einem Unterdruck beaufschlagt, sodass die Membran auf das Schichtelement und das Trägerprofil gedrängt wird.

Gemäß einer weiteren Ausführungsform könnte die Aufnahme einen Deckel aufweisen, der auf einer von dem Trägerprofil abgewandten Seite der Membran platzierbar ist, wobei die Antriebseinrichtung dazu ausgebildet ist, einen Überdruck in einen zwischen der Membran und dem Deckel vorliegenden Zwischenraum zu erzeugen. Die Antriebseinrichtung fördert daher Luft in den Zwischenraum ein, um darin den Druck zu generieren.

### Kurze Beschreibung der Figuren

Nachfolgend wird anhand der beigefügten Zeichnungen näher auf Ausführungsbeispiele eingegangen. Die Darstellungen sind schematisch und nicht maßstabsgetreu. Gleiche Bezugszeichen beziehen sich auf gleiche oder ähnliche Elemente. Es zeigen:
- Fig. 1 bis 3: eine schematische Darstellung eines Systems zum Beschichten eines metallischen Trägerprofils gemäß einem Ausführungsbeispiel.
- Fig. 4: eine schematische Darstellung eines Systems zum Beschichten eines metallischen Trägerprofils gemäß einem weiteren Ausführungsbeispiel.
- Fig. 5: eine schematische Darstellung eines Verfahrens zum Beschichten eines metallischen Trägerprofils gemäß einem Ausführungsbeispiel.

### Detaillierte Beschreibung von Ausführungsbeispielen

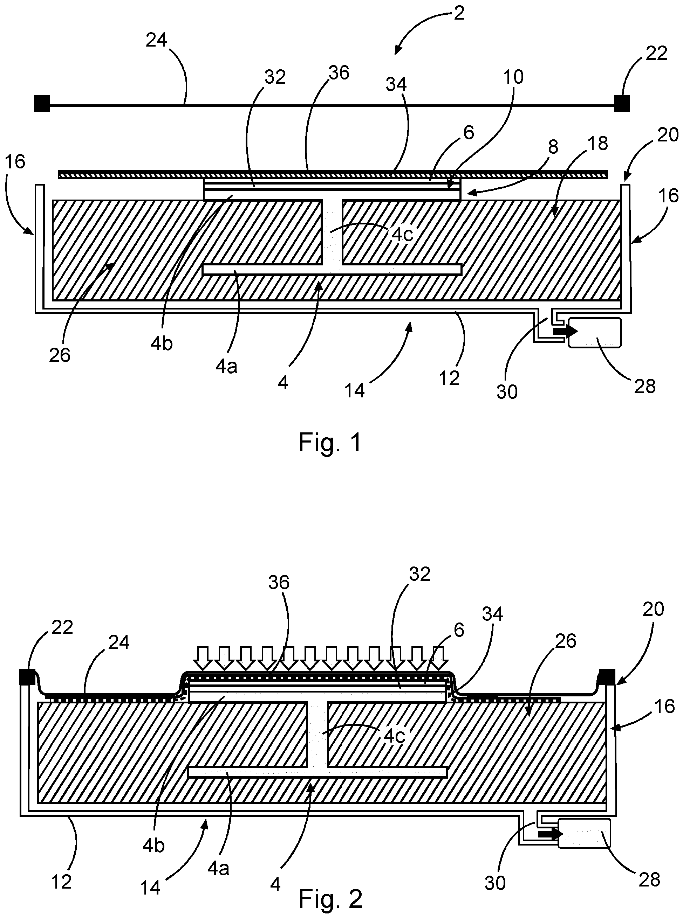

Fig. 1 zeigt eine Schnittdarstellung eines Systems 2 zum Beschichten eines metallischen Trägerprofils 4 mit einer Schicht aus einem korrosionsresistenten Material, das hier als ein Schichtelement 6 gezeigt ist. Das Trägerprofil 4 wird beispielhaft als ein Doppel-T-Träger dargestellt, welcher sich senkrecht zu der Zeichnungsebene erstreckt. Das Trägerprofil 4 weist einen unteren Gurt 4a und einen in einem Abstand dazu angeordneten oberen Gurt 4b auf. Zwischen den beiden Gurten 4a und 4b kann beispielhaft ein Steg 4c angeordnet sein. Alternativ zu der Ausführung könnten auch zwei seitlich angeordnete Stege 4c vorgesehen sein, die voneinander beabstandet sind und die Breite des Trägerprofils 4 definieren. Der untere Gurt 4a kann schmaler als der obere Gurt 4b sein und umgekehrt. An einer Oberseite 8, d.h. auf dem oberen Gurt 4b auf einer von dem unteren Gurt 4a abgewandten Seite, liegt eine zu beschichtende Fläche 10. Es versteht sich, dass völlig unterschiedliche Trägerprofile verwendbar sind, die unterschiedliche Formen aufweisen. Es ist dabei bevorzugt, dass die zu beschichtende Fläche 10 in der Zeichnungsebene nach oben richtbar ist.

Das Trägerprofil 4 befindet sich in einer gasundurchlässigen Aufnahme 12, die hier beispielhaft wannenförmig ausgebildet ist und eine Bodenfläche 14 aufweist, die von Seitenflächen 16 umgeben ist.

In der Aufnahme 12 befindet sich ein Halter 18 zum ortsfesten Halten des Trägerprofils 4. Der Halter 18 ist hier beispielhaft in Form mehrerer Profilstücke ausgebildet, die mit dem Trägerprofil 4 und darin angeordneten Hinterschneidungen sowie der Aufnahme 12 bündig in Kontakt stehen, sodass das Trägerprofil 4 in der Aufnahme 12 nicht verrutschen kann. Alternativ dazu wären auch Klemmhalter oder andere Einrichtungen denkbar, die mechanisch mit dem Trägerprofil 4 verspannt werden müssen und etwa an der Bodenfläche 14 angeordnet ist. Ziel ist, die Oberseite 8 bzw. die zu beschichtende Fläche 10 in einer definierten Ausrichtung zu halten, sodass temporär eine gewisse Kraft auf die zu beschichtende Fläche 10 einwirken kann, ohne dass das Trägerprofil 4 verrutscht.

Zum Auflegen auf einen oberen umlaufenden Rand 20 der Seitenflächen 16 ist ein umlaufender, geschlossener Spannrahmen 22 vorgesehen, der eine elastische und gasundurchlässige Membran 24 aufspannt. Durch das Auflegen des Spannrahmens 22 bzw. der Membran 24 auf den Rand 20 entsteht mit der Aufnahme 12 ein geschlossener Zwischenraum 26. An der Bodenfläche 14 ist eine Vakuumpumpe 28 als Luftfördereinheit angeordnet und steht über einen Luftanschluss 30 mit dem Zwischenraum 26in Fluidverbindung. Liegt der Spannrahmen 22 bzw. die Membran 24 auf dem Rand 20 der Aufnahme 12 auf, kann durch Betreiben der Vakuumpumpe 28 der Zwischenraum 26 evakuiert werden, sodass die Membran 24 unter Wirkung des Umgebungsdrucks gleichmäßig auf das Trägerprofil 4 drückt.

Auf der zu beschichtenden Fläche 10 befindet sich eine Schicht 32 eines adhäsiven, aushärtbaren Stoffs auf der Fläche 10. Hierauf liegt das Schichtelement 6 auf. Das Schichtelement 6 und die Schicht 32 können bereits vor dem Auflegen des Schichtelements 6 miteinander kombiniert sein, durch Aufstreichen, Aufsprühen oder einen anderen Auftragprozess. Andererseits ist denkbar, dass die Schicht 32 bereits auf der zu beschichtenden Fläche 10 angeordnet ist, bevor das Schichtelement 6 aufgelegt wird. Weiterhin ist denkbar, dass die Schicht 32 vor dem Auflegen des Schichtelements 6 durch zwei Teilschichten ausgebildet ist, die sich jeweils auf dem Schichtelement 6 bzw. der zu beschichtenden Fläche 10 befinden und beim Auflegen des Schichtelements 6 miteinander zu einer gemeinsamen Schicht 32 verbunden werden.

In diesem Ausführungsbeispiel befindet sich ein gasdurchlässiges Gewebe 34 auf dem Schichtelement 6 und wird dort von einer Folie 36 abgedeckt, die bevorzugt gleitfähig ist. Hierauf liegt die Membran 24 und kann auf der Folie 36 gleiten, um bei der Evakuierung eine der Kraftentwicklung folgende Ausrichtung einzunehmen und sich dadurch zu straffen. Wird die Vakuumpumpe 28 betrieben, evakuiert diese den Zwischenraum 26, sodass die Membran 24 auf die Folie 36 gepresst wird. Luft, die sich zwischen der Folie und dem Schichtelement 6 befindet, wird durch das gasdurchlässige Gewebe 34 nach außen gedrängt. Dies kann sich bei besonders großen Längen oder abfallender Form anbieten. Bei Trägerprofilen 4 mit einfacherem Aufbau könnte das Gewebe 34 auch weggelassen werden. Das Schichtelement 6 wird auf die Schicht des adhäsiven Stoffs 32 und die zu beschichtende Fläche 10 gepresst. Das Vakuum in dem Zwischenraum 26 wird so lange aufrechterhalten, bis der adhäsive Stoff 32 ausgehärtet ist und das Schichtelement 6 auf der Fläche 10 unter Ausbildung einer definierten Fugenstärke klebt.

Dieser Vorgang ist in Fig. 2 gezeigt. Dort ist der Zwischenraum 26 evakuiert, sodass die Membran 24, die Folie 36 und das gasdurchlässige Gewebe 34 auf den Halter 18 und die Anordnung aus Folie 36, gasdurchlässigem Gewebe 34, Schichtelement 6 und Schicht 32 aufgepresst wird. Der Halter 18 ist hier wie vorangehend erwähnt ausgeführt und füllt den Zwischenraum 26 unter Einschluss des Trägerprofils 4 zu einem Großteil aus, sodass er sich bis zu einem an die Oberseite 8 angrenzenden Bereich des Zwischenraums 26 erstreckt. Die Membran 24 kann sich beim Evakuieren folglich hierauf abstützen und wird dadurch vor Beschädigungen durch Scherwirkung an Kanten des Trägerprofils 4 geschützt.

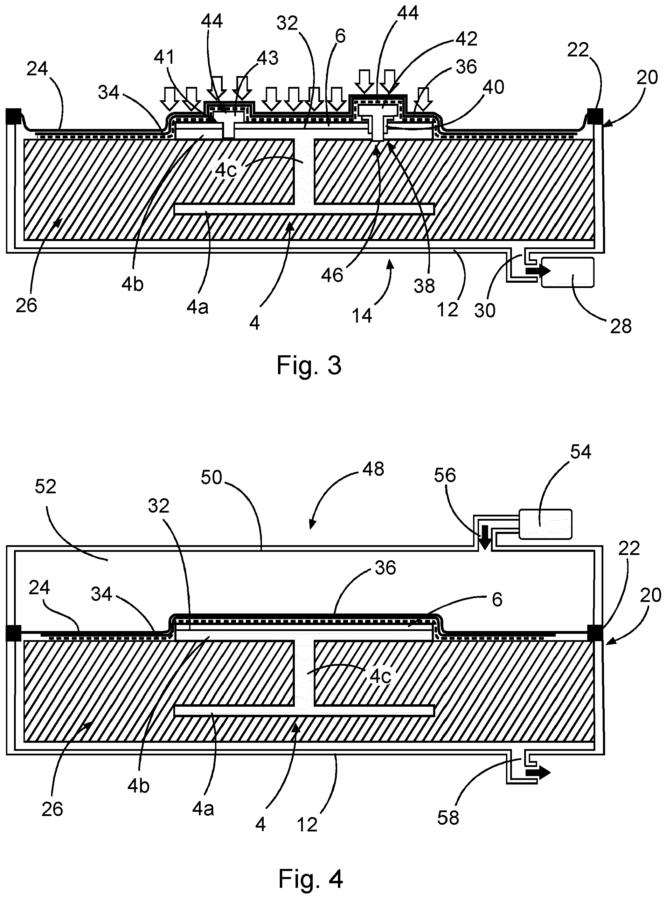

In Fig. 3 wird beispielhaft dargestellt, dass das Trägerprofil 4 eine Bohrung 38 aufweist, in die eine Buchse 40 gesteckt ist. Es kann sinnvoll sein, die Buchse 40 mit einer höheren Kraft durch die Membran 24 in Richtung des Trägerprofils 4 zu pressen als das direkt benachbarte Schichtelement 6. Hierzu wird exemplarisch ein Druckstempel 42 eingesetzt, der auf einer zu der Membran 24 weisenden Oberseite 44 eine größere Fläche aufweist als auf einer hiervon abgewandten Unterseite 46. Da eine Fläche an der Oberseite 44 der Buchse 40 größer ist als eine obere Begrenzungsfläche der Buchse 40, wird eine stärkere Kraft auf die Buchse 40 ausgeübt, als dies direkt durch die Membran 24 auf die Buchse 40 möglich wäre.

Wie in der linken Hälfte der Fig. 3 gezeigt kann ein weiterer Druckstempel 43 auch dazu verwendet werden, lediglich lokale Klebeschichtdicken zu verringern. Hierfür presst der Druckstempel 43 direkt auf das Schichtelement 6 mit einer Absatzfläche 41 an der Unterseite 46, die einen geringeren Flächeninhalt aufweist als eine zu der Membran 24 gerichtete Oberseite 44.

Fig. 4 eine leichte Abwandlung des Systems 2 in Form eines Systems 48, bei dem ein fester Deckel 50 vorgesehen ist, der auf einer von der Aufnahme 12 abgewandten Seite einen Zwischenraum 52 ausbildet, der durch eine Fluidfördereinheit 54 über einen Fluidzufuhranschluss 56 mit druckbeaufschlagtem Fluid, beispielsweise Luft, befüllt wird. Dadurch entsteht ein Überdruck, der auf die darunter angeordnete Membran 24 wirkt und diese in Richtung des Trägerprofils 4 presst. Gleichzeitig kann Luft aus dem unter der Membran 24 liegenden Zwischenraum 26 durch einen in der Bodenfläche 14 angeordneten Luftauslass 58 nach außen strömen, um einen Druckausgleich zu schaffen, um die Bewegung der Membran 24 zu unterstützen.

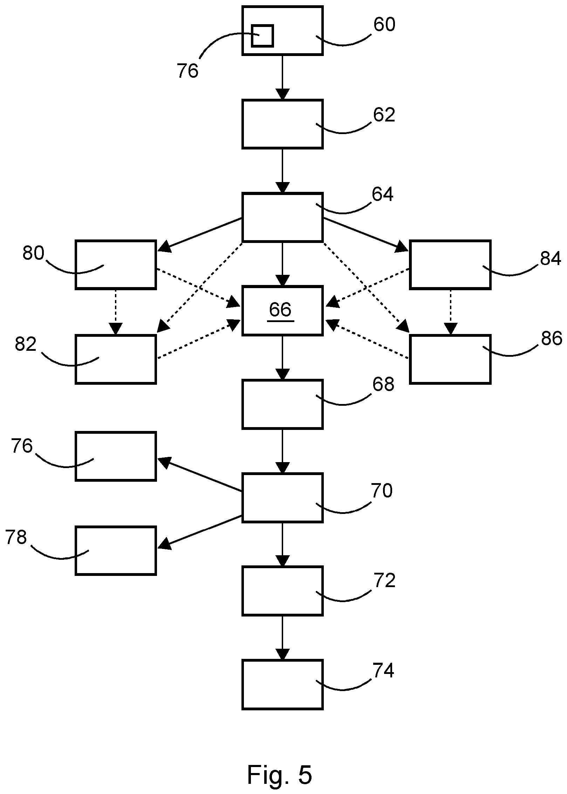

Fig. 5 zeigt schematisch das Verfahren zum Beschichten eines metallischen Trägerprofils. Das Verfahren weist die Schritte des Bereitstellens 60 des metallischen Trägerprofils 4 mit der zu beschichtenden Fläche 10, des Bereitstellens 62 des auf die zu beschichtende Fläche 10 angepassten Schichtelements 6 aus dem korrosionsresistenten Material, des Aufbringens 64 des adhäsiven, aushärtbaren Stoffs auf mindestens einen der zu beschichtenden Fläche 10 und des Schichtelements 6, des Aufbringens 66 des Schichtelements 6 auf die zu beschichtende Fläche 10, des Abdeckens 68 der Anordnung aus Trägerprofil 4 und Schichtelement 6 durch ein Kompaktierelement, das etwa in Form der Membran 24 ausführbar ist, des Aufpressens 70 des Schichtelements 6 auf die zu beschichtende Fläche 10 mittels des Kompaktierelements 24 zum Erzielen einer vorbestimmten, durch den adhäsiven Stoff eingenommenen Fugenstärke, des Aushärtens 72 des adhäsiven Stoffs bei Beibehaltung der Fugenstärke zum Generieren eines Verbundes, und des Entfernens 74 des Kompaktierelements 24.

Das Bereitstellen 60 des Trägerprofils 4 umfasst beispielhaft das Haltern des Trägerprofils 4 in der Aufnahme 12. Wie erwähnt kann das Abdecken 68 das Abdecken durch die gasundurchlässige Membran 24 umfassen, die mit der Aufnahme 12 oder einem darüber angeordneten Deckel 50 abdichtend verbunden wird. Das Aufpressen 70 des Schichtelements 6 umfasst beispielhaft ein Evakuieren 76 des Zwischenraums 26 zwischen der Aufnahme 12 und der Membran 24 bzw. eine Druckerhöhung 78 in dem Zwischenraum 52 zwischen der Membran 24 und dem Deckel 50 umfasst. Das Verfahren kann weiterhin das Auflegen 80 eines gasdurchlässigen, zumindest biegeweichen Flächenelements 34 auf die Anordnung aus Trägerprofil 4 und Schichtelement 6 aufweisen. Ferner kann das Verfahren das Auflegen 82 der Folie 36 auf die Anordnung aus Trägerprofil 4 und Schichtelement 6 zum Erhöhen von Gleiteigenschaften der Membran 24 umfassen. Zum lokalen Verringern der Fugenstärke umfasst das Verfahren beispielhaft das lokale Anordnen 84 mindestens eines Druckstempels 42, 43 auf der Anordnung aus Trägerprofil 4 und Schichtelement 6, wobei eine zu der Anordnung gewandte Unterseite eine kleinere Fläche aufweist als eine Fläche auf einer zu dem Kompaktierelement 24 gewandten Oberseite des mindestens einen Druckstempels 42, 43. Beispielhaft wird weiterhin eine Buchse 40 in eine Bohrung 38 eingebracht 86, die sich durch die Anordnung erstreckt, wobei die mindestens eine Buchse 40 durch einen des mindestens einen Druckstempels 42, 43 abgedeckt wird.

Ergänzend ist darauf hinzuweisen, dass "umfassend" oder "aufweisend" keine anderen Elemente oder Schritte ausschließt und "eine" oder "ein" keine Vielzahl ausschließt. Ferner sei darauf hingewiesen, dass Merkmale oder Schritte, die mit Verweis auf eines der obigen Ausführungsbeispiele beschrieben worden sind, auch in Kombination mit anderen Merkmalen oder Schritten anderer oben beschriebener Ausführungsbeispiele verwendet werden können. Bezugszeichen in den Ansprüchen sind nicht als Einschränkung anzusehen.

### Bezugszeichenliste

- 2: System
- 4: Trägerprofil
- 4a: unterer Gurt
- 4b: oberer Gurt
- 4c: Steg
- 6: Schichtelement
- 8: Oberseite
- 10: zu beschichtende Fläche
- 12: Aufnahme
- 14: Bodenfläche
- 16: Seitenfläche
- 18: Halter
- 20: Rand
- 22: Spannrahmen
- 24: Membran
- 26: Zwischenraum
- 28: Vakuumpumpe
- 30: Luftanschluss
- 32: Schicht
- 34: gasdurchlässiges Gewebe
- 36: Folie
- 38: Bohrung
- 40: Buchse
- 41: Absatzfläche
- 42: Druckstempel
- 43: Druckstempel
- 44: Oberseite
- 46: Unterseite
- 48: System
- 50: Deckel
- 52: Zwischenraum
- 54: Luftfördereinheit
- 56: Luftzufuhranschluss
- 58: Luftauslass

## Patentansprüche

1. Verfahren zum Beschichten eines metallischen Trägerprofils (4) mit einer Schicht aus einem korrosionsresistenten Material, aufweisend:
- Bereitstellen (60) des metallischen Trägerprofils (4) mit einer zu beschichtenden Fläche,
- Bereitstellen (62) eines auf die zu beschichtende Fläche (10) angepassten Schichtelements (6) aus dem korrosionsresistenten Material,
- Aufbringen (64) eines adhäsiven, aushärtbaren Stoffs (32) auf mindestens einen der zu beschichtenden Fläche (10) und des Schichtelements (6),
- Aufbringen (66) des Schichtelements (6) auf die zu beschichtende Fläche (10),
- Abdecken (68) der Anordnung aus Trägerprofil (4) und Schichtelement (6) durch ein Kompaktierelement (24),
- Aufpressen (70) des Schichtelements (6) auf die zu beschichtende Fläche (10) mittels des Kompaktierelements (24) zum Erzielen einer vorbestimmten, durch den adhäsiven Stoff (32) eingenommenen Fugenstärke,
- Aushärten (72) des adhäsiven Stoffs (32) bei Beibehaltung der Fugenstärke zum Generieren eines Verbundes, und
- Entfernen (74) des Kompaktierelements;
wobei das Bereitstellen (60) des Trägerprofils (4) das Haltern des Trägerprofils in einer Aufnahme umfasst,
wobei das Abdecken (68) durch ein Kompaktierelement (24) das Abdecken durch eine gasundurchlässige Membran (24) umfasst, die mit der Aufnahme (12) oder einem darüber angeordneten Deckel (50) abdichtend verbunden wird, und
wobei das Aufpressen (70) des Schichtelements (6) ein Evakuieren (76) eines Zwischenraums (26) zwischen der Aufnahme (12) und der Membran (24) bzw. eine Druckerhöhung (78) in einem Zwischenraum (52) zwischen der Membran (24) und dem Deckel (50) umfasst;
ferner aufweisend mindestens einen der folgenden Schritte:
Auflegen (80) eines gasdurchlässigen, zumindest biegeweichen Flächenelements (34) auf die Anordnung aus Trägerprofil (4) und Schichtelement (6); und
Auflegen (82) einer Folie (36) auf die Anordnung aus Trägerprofil (4) und Schichtelement (6) zum Erhöhen von Gleiteigenschaften der Membran (24).

2. Verfahren zum Beschichten eines metallischen Trägerprofils (4) mit einer Schicht aus einem korrosionsresistenten Material, aufweisend:
- Bereitstellen (60) des metallischen Trägerprofils (4) mit einer zu beschichtenden Fläche,
- Bereitstellen (62) eines auf die zu beschichtende Fläche (10) angepassten Schichtelements (6) aus dem korrosionsresistenten Material,
- Aufbringen (64) eines adhäsiven, aushärtbaren Stoffs (32) auf mindestens einen der zu beschichtenden Fläche (10) und des Schichtelements (6),
- Aufbringen (66) des Schichtelements (6) auf die zu beschichtende Fläche (10),
- Abdecken (68) der Anordnung aus Trägerprofil (4) und Schichtelement (6) durch ein Kompaktierelement (24),
- Aufpressen (70) des Schichtelements (6) auf die zu beschichtende Fläche (10) mittels des Kompaktierelements (24) zum Erzielen einer vorbestimmten, durch den adhäsiven Stoff (32) eingenommenen Fugenstärke,
- Aushärten (72) des adhäsiven Stoffs (32) bei Beibehaltung der Fugenstärke zum Generieren eines Verbundes, und
- Entfernen (74) des Kompaktierelements;
ferner aufweisend das lokale Anordnen (84) mindestens eines Druckstempels (42, 43) auf der Anordnung aus Trägerprofil (4) und Schichtelement (6), wobei zum lokalen Verringern der Fugenstärke eine zu der Anordnung gewandte Unterseite (46) des mindestens einen Druckstempels (42, 43) einen geringeren Flächeninhalt aufweist als eine zu dem Kompaktierelement (24) gewandte Oberseite (44) des mindestens einen Druckstempels (42, 43).

3. Verfahren nach Anspruch 2,
wobei das Bereitstellen (60) des Trägerprofils (4) das Haltern des Trägerprofils in einer Aufnahme umfasst,
wobei das Abdecken (68) durch ein Kompaktierelement (24) das Abdecken durch eine gasundurchlässige Membran (24) umfasst, die mit der Aufnahme (12) oder einem darüber angeordneten Deckel (50) abdichtend verbunden wird, und
wobei das Aufpressen (70) des Schichtelements (6) ein Evakuieren (76) eines Zwischenraums (26) zwischen der Aufnahme (12) und der Membran (24) bzw. eine Druckerhöhung (78) in einem Zwischenraum (52) zwischen der Membran (24) und dem Deckel (50) umfasst.

4. Verfahren nach Anspruch 1 oder 3,
wobei die Membran (24) elastisch dehnbar ist.

5. Verfahren nach einem der Ansprüche 3 und 4,
ferner aufweisend Auflegen (80) eines gasdurchlässigen, zumindest biegeweichen Flächenelements (34) auf die Anordnung aus Trägerprofil (4) und Schichtelement (6).

6. Verfahren nach einem der Ansprüche 3 bis 5,
ferner aufweisend Auflegen (82) einer Folie (36) auf die Anordnung aus Trägerprofil (4) und Schichtelement (6) zum Erhöhen von Gleiteigenschaften der Membran (24).

7. Verfahren nach Anspruch 1,
ferner aufweisend das lokale Anordnen (84) mindestens eines Druckstempels (42, 43) auf der Anordnung aus Trägerprofil (4) und Schichtelement (6),
wobei zum lokalen Verringern der Fugenstärke eine zu der Anordnung gewandte Unterseite (46) des mindestens einen Druckstempels (42, 43) einen geringeren Flächeninhalt aufweist als eine zu dem Kompaktierelement (24) gewandte Oberseite (44) des mindestens einen Druckstempels (42, 43).

8. Verfahren nach Anspruch 2 oder 7,
ferner aufweisend das Einbringen (86) mindestens einer Buchse (40) in eine Bohrung (38), die sich durch die Anordnung erstreckt,
wobei die mindestens eine Buchse (40) durch einen des mindestens einen Druckstempels (42, 43) abgedeckt wird.

9. System (2, 48) zum Beschichten eines metallischen Trägerprofils (4) mit einer Schicht aus einem korrosionsresistenten Material, aufweisend:
- eine Aufnahme (12) zum Haltern des metallischen Trägerprofils (4) mit einer zu beschichtenden Fläche (10),
- ein Schichtelement (6) aus dem korrosionsresistenten Material, wobei das Schichtelement (6) an die zu beschichtende Fläche (10) angepasst ist,
- einen adhäsiven Stoff (32) zum Kleben des Schichtelements (6) an die zu beschichtende Fläche (10),
- ein Kompaktierelement (24), das derart dimensioniert ist, dass es die zu beschichtende Fläche (10) sowie das darauf angeordnete Schichtelement (6) abdecken kann, und
- eine Antriebseinrichtung (28, 54), die mit dem Kompaktierelement (24) koppelbar ist und dazu ausgebildet ist, das Kompaktierelement (24) mit einer vorgegeben Kraft und für eine vorgegebene Zeit auf das Schichtelement (6) zu pressen,
wobei das Kompaktierelement (24) elastisch verformbar ist, sodass es sich während des Pressens an die Form der Anordnung anpasst;
ferner aufweisend mindestens eines der Folgenden:
ein gasdurchlässiges, zumindest biegeweiches Flächenelement (34) zum Auflegen auf die Anordnung aus Trägerprofil (4) und Schichtelement (6);
eine Folie (36) zum Auflegen auf die Anordnung aus Trägerprofil (4) und Schichtelement zum Erhöhen von Gleiteigenschaften der Membran (24); und
mindestens einen Druckstempel (42, 43) zum Aufbringen auf der Anordnung aus Trägerprofil (4) und Schichtelement (6), wobei eine zu der Anordnung gewandte Unterseite (46) des mindestens einen Druckstempels (42, 43) eine kleinere Fläche aufweist als eine Fläche auf einer zu dem Kompaktierelement (24) gewandten Oberseite (44) des mindestens einen Druckstempels (42, 43).

10. System (2, 48) nach Anspruch 9,
wobei die Aufnahme (12) wannenförmig ist und einen Halter (18) zum ortsfesten Halten des Trägerprofils (4) aufweist.

11. System (2, 48) nach Anspruch 9 oder 10,
wobei das Kompaktierelement (24) eine gasundurchlässige Membran (24) umfasst, die die Aufnahme (12) überspannt, um einen gasdichten Zwischenraum (26) zwischen der Aufnahme (12) und der Membran (24) zu erzeugen, und
wobei die Antriebseinrichtung (28, 54) eine Fluidpumpe (28) aufweist, die den Zwischenraum (26) mit einem Unterdruck beaufschlagt, sodass die Membran (24) auf das Schichtelement (6) und das Trägerprofil (4) gedrängt wird.

12. System (2, 48) nach Anspruch 9 oder 10,
wobei die Aufnahme (12) einen Deckel (50) aufweist, der auf einer von dem Trägerprofil (4) abgewandten Seite der Membran (24) platzierbar ist, und
wobei die Antriebseinrichtung (28, 54) dazu ausgebildet ist, einen Überdruck in einen zwischen der Membran (24) und dem Deckel (50) vorliegenden Zwischenraum (52) zu erzeugen.

## Claims

1. Method for coating a metallic support profile (4) with a layer of a corrosion-resistant material, comprising:
- providing (60) the metallic support profile (4) with a surface to be coated,
- providing (62) a layer element (6) of the corrosion-resistant material adapted to the surface (10) to be coated,
- applying (64) an adhesive, curable substance (32) to at least one of the surface (10) to be coated and the layer element (6),
- applying (66) the layer element (6) to the surface (10) to be coated,
- covering (68) the arrangement comprising the support profile (4) and the layer element (6) by a compacting element (24),
- pressing (70) the layer element (6) onto the surface (10) to be coated by means of the compacting element (24) to achieve a predetermined joint thickness taken up by the adhesive material (32),
- curing (72) the adhesive material (32) while maintaining the joint thickness to generate a bond, and
- removing (74) the compacting element;
wherein the providing (60) of the support profile (4) comprises holding the support profile in a receptacle,
wherein the covering (68) by a compacting element (24) comprises the covering by a gas-impermeable membrane (24) which is sealingly connected to the receptacle (12) or a cover (50) arranged thereover, and
wherein the pressing (70) of the layer element (6) comprises evacuating (76) of an intermediate space (26) between the receptacle (12) and the membrane (24) or increasing a pressure (78) in an intermediate space (52) between the membrane (24) and the cover (50);
further comprising at least one of the following steps:
placing (80) of a gas-permeable, at least flexible surface element (34) on the arrangement of the support profile (4) and the layer element (6); and
applying (82) of a film (36) to the arrangement of the support profile (4) and the layer element (6) to increase sliding properties of the membrane (24).

2. Method for coating a metallic support profile (4) with a layer of a corrosion-resistant material, comprising:
- providing (60) the metallic support profile (4) with a surface to be coated,
- providing (62) a layer element (6) of the corrosion-resistant material adapted to the surface (10) to be coated,
- applying (64) an adhesive, curable substance (32) to at least one of the surface (10) to be coated and the layer element (6),
- applying (66) the layer element (6) to the surface (10) to be coated,
- covering (68) the arrangement of the support profile (4) and the layer element (6) by a compacting element (24),
- pressing (70) the layer element (6) onto the surface (10) to be coated by means of the compacting element (24) to achieve a predetermined joint thickness taken up by the adhesive material (32),
- curing (72) the adhesive material (32) while maintaining the joint thickness to generate a bond, and
- removing (74) the compacting element;
further comprising locally arranging (84) of at least one pressure stamp (42, 43) on the arrangement of the support profile (4) and the layer element (6), wherein, in order to locally reduce the joint thickness, an underside (46) of the at least one pressure stamp (42, 43) facing the arrangement has a smaller surface area than an upper side (44) of the at least one pressure stamp (42, 43) facing the compacting element (24).

3. Method according to claim 2,
wherein the providing (60) the support profile (4) comprises holding the support profile in a receptacle,
wherein the covering (68) by a compacting element (24) comprises the covering by a gas-impermeable membrane (24) which is sealingly connected to the receptacle (12) or a cover (50) arranged thereover, and
wherein the pressing (70) of the layering element (6) comprises evacuating (76) of an intermediate space (26) between the receptacle (12) and the membrane (24) or increasing a pressure (78) in an intermediate space (52) between the membrane (24) and the cover (50).

4. Method according to claim 1 or 3,
wherein the membrane (24) is elastically stretchable.

5. Method according to any one of claims 3 and 4,
further comprising placing (80) of a gas-permeable, at least flexible surface element (34) on the arrangement of the support profile (4) and the layer element (6).

6. Method according to any one of claims 3 to 5,
further comprising placing (82) a film (36) on the arrangement of the support profile (4) and the layer element (6) for increasing sliding properties of the membrane (24).

7. Method according to claim 1,
further comprising locally arranging (84) at least one pressure stamp (42, 43) on the arrangement of the support profile (4) and the layer element (6),
wherein, in order to locally reduce the joint thickness, an underside (46) of the at least one pressure stamp (42, 43) facing the arrangement comprises a smaller surface area than an upper side (44) of the at least one pressure stamp (42, 43) facing the compacting element (24).

8. Method according to claim 2 or 7,
further comprising inserting (86) at least one bushing (40) into a bore (38) extending through the arrangement,
wherein the at least one bushing (40) is covered by one of the at least one pressure stamp (42, 43).

9. System (2, 48) for coating a metallic support profile (4) with a layer of a corrosion-resistant material, comprising:
- a receptacle (12) for holding the metallic support profile (4) with a surface (10) to be coated,
- a layer element (6) made of the corrosion-resistant material, the layer element (6) being adapted to the surface (10) to be coated,
- an adhesive material (32) for bonding the layer element (6) to the surface (10) to be coated,
- a compacting element (24) which is dimensioned in such a way that it can cover the surface (10) to be coated and the layer element (6) arranged thereon, and
- a drive device (28, 54) which is couplable to the compacting element (24) and is designed to press the compacting element (24) onto the layering element (6) with a predetermined force and for a predetermined time,
wherein the compacting element (24) is elastically deformable so that it adapts to the shape of the arrangement during pressing;
further comprising at least one of the following:
a gas-permeable, at least flexible surface element (34) for placing on the arrangement of the support profile (4) and the layer element (6);
a film (36) for placing on the arrangement of the support profile (4) and the layer element to increase sliding properties of the membrane (24); and
at least one pressure stamp (42, 43) for application to the arrangement of the support profile (4) and the layer element (6), wherein an underside (46) of the at least one pressure stamp (42, 43) facing the arrangement has a smaller area than an area on an upper side (44) of the at least one pressure stamp (42, 43) facing the compacting element (24).

10. System (2, 48) according to claim 9,
wherein the receptacle (12) is trough-shaped and comprises a holder (18) for holding the support profile (4) in a fixed position.

11. System (2, 48) according to claim 9 or 10,
wherein the compacting element (24) comprises a gas-impermeable membrane (24) spanning the receptacle (12) to create a gas-tight intermediate space (26) between the receptacle (12) and the membrane (24), and
wherein the drive device (28, 54) comprises a fluid pump (28) which applies a negative pressure to the intermediate space (26) so that the membrane (24) is forced onto the layer element (6) and the support profile (4).

12. System (2, 48) according to claim 9 or 10,
wherein the receptacle (12) comprises a cover (50) which is placeable on a side of the membrane (24) facing away from the support profile (4), and
wherein the drive device (28, 54) is designed to generate an overpressure in an intermediate space (52) present between the membrane (24) and the cover (50).

## Revendications

1. Procédé de revêtement d'un profilé support métallique (4) avec une couche d'un matériau résistant à la corrosion, comprenant :
- fournir (60) du profilé support métallique (4) avec une surface à revêtir,
- fournir (62) d'un élément de couche (6) adapté à la surface à revêtir (10) et constitué du matériau résistant à la corrosion,
- appliquer (64) d'une substance adhésive durcissable (32) sur au moins l'une de la surface à revêtir (10) et de l'élément de couche (6),
- appliquer (66) de l'élément de couche (6) sur la surface à revêtir (10),
- recouvrir (68) de l'ensemble constitué par le profilé support (4) et l'élément de couche (6) par un élément de compactage (24),
- presser (70) l'élément de couche (6) sur la surface à revêtir (10) au moyen de l'élément de compactage (24) pour obtenir une épaisseur de joint prédéterminée occupée par la substance adhésive (32),
- durcisse (72) du substance adhésive (32) tout en maintenant l'épaisseur du joint pour générer une liaison, et
- retirer (74) l'élément de compactage ;
dans lequel la fournir (60) du profilé de support (4) comprend le maintien du profilé de support dans un logement,
dans lequel le recouvrir (68) par un élément de compactage (24) comprend recouvrir par une membrane imperméable aux gaz (24) qui est reliée de manière étanche au logement (12) ou à un couvercle (50) disposé par-dessus, et
dans lequel le presser (70) de l'élément de couche (6) comprend une mise sous vide (76) d'un espace intermédiaire (26) entre le logement (12) et la membrane (24) ou augmenter pression (78) dans un espace intermédiaire (52) entre la membrane (24) et le couvercle (50) ;
comprenant en outre au moins une des étapes suivantes :
poser (80) d'un élément de surface (34) perméable aux gaz et au moins souple à la flexion sur l'ensemble constitué par le profilé de support (4) et l'élément de couche (6) ; et
poser (82) d'une feuille (36) sur l'ensemble constitué par le profilé de support (4) et l'élément de couche (6) pour augmenter les propriétés de glissement de la membrane (24).

2. Procédé de revêtement d'un profilé support métallique (4) avec une couche d'un matériau résistant à la corrosion, comprenant :
- fournir (60) du profilé support métallique (4) avec une surface à revêtir,
- fournir (62) d'un élément de couche (6) adapté à la surface à revêtir (10) et constitué du matériau résistant à la corrosion,
- appliquer (64) d'une substance adhésive durcissable (32) sur au moins l'une de la surface à revêtir (10) et de l'élément de couche (6),
- appliquer (66) de l'élément de couche (6) sur la surface (10) à revêtir,
- recouvrir (68) de l'ensemble constitué par le profilé support (4) et l'élément de couche (6) par un élément de compactage (24),
- presser (70) l'élément de couche (6) sur la surface à revêtir (10) au moyen de l'élément de compactage (24) pour obtenir une épaisseur de joint prédéterminée occupée par la substance adhésive (32),
- durcisse (72) du substance adhésive (32) tout en maintenant l'épaisseur du joint pour générer une liaison, et
- retirer (74) l'élément de compactage ;
comprenant en outre fournir locale (84) d'au moins un poinçon de pression (42, 43) sur l'ensemble constitué d'un profilé de support (4) et d'un élément de couche (6), une face inférieure (46), tournée vers l'ensemble, du au moins un poinçon de pression (42, 43) comprenant, pour réduire localement l'épaisseur du joint, une superficie inférieure à celle d'une face supérieure (44), tournée vers l'élément de compactage (24), du au moins un poinçon de pression (42, 43).

3. Procédé selon la revendication 2,
dans lequel fournir (60) du profilé support (4) comprend maintien du profilé support dans un logement,
dans lequel recouvrir (68) par un élément de compactage (24) comprend recouvrir par une membrane imperméable aux gaz (24) qui est reliée de manière étanche au logement (12) ou à un couvercle (50) placé au-dessus, et
dans lequel le presser (70) de l'élément de couche (6) comprend une mise sous vide (76) d'un espace intermédiaire (26) entre le logement (12) et la membrane (24) ou augmenter pression (78) dans un espace intermédiaire (52) entre la membrane (24) et le couvercle (50).

4. Procédé selon la revendication 1 ou 3,
dans lequel la membrane (24) étant élastiquement extensible.

5. Procédé selon l'une des revendications 3 et 4,
comprenant en outre poser (80) d'un élément de surface (34) perméable aux gaz et au moins souple à la flexion sur l'ensemble constitué par le profilé support (4) et l'élément de couche (6).

6. Procédé selon l'une quelconque des revendications 3 à 5,
comprenant en outre appliquer (82) d'un feuille (36) sur l'ensemble du profilé support (4) et de l'élément en couches (6) pour augmenter les propriétés de glissement de la membrane (24).

7. Procédé selon la revendication 1,
comprenant en outre placer local (84) d'au moins un poinçon de pression (42, 43) sur l'ensemble constitué par le profilé support (4) et l'élément de couche (6),
dans lequel, pour réduire localement l'épaisseur du joint, une face inférieure (46), tournée vers l'agencement, du au moins un poinçon de compression (42, 43) présente une plus petite surface qu'une face supérieure (44), tournée vers l'élément de compactage (24), du au moins un poinçon de compression (42, 43).

8. Procédé selon la revendication 2 ou 7,
comprenant en outre insérer (86) d'au moins une douille (40) dans un alésage (38) s'étendant à travers l'ensemble,
dans lequel ladite au moins une douille (40) est recouverte par l'un dudit au moins un poinçon de compression (42, 43).

9. Système (2, 48) pour revêtir un profilé support métallique (4) avec une couche d'un matériau résistant à la corrosion, comprenant :
- un logement (12) pour maintenir le profilé support métallique (4) avec une surface à revêtir (10),
- un élément de couche (6) en le matériau résistant à la corrosion, l'élément de couche (6) étant adapté à la surface à revêtir (10),
- une substance adhésive (32) pour faire adhérer l'élément de couche (6) à la surface à revêtir (10),
- un élément de compactage (24), qui est dimensionné de telle sorte qu'il peut recouvrir la surface à revêtir (10) ainsi que l'élément de couche (6) disposé sur celle-ci, et
- un dispositif d'entraînement (28, 54) qui peut être couplé à l'élément de compactage (24) et qui est conçu pour presser l'élément de compactage (24) avec une force prédéterminée et pendant un temps prédéterminé sur l'élément de couche (6),
dans lequel l'élément de compactage (24) est élastiquement déformable de sorte qu'il s'adapte à la forme de l'ensemble pendant le pressage ;
comprenant en outre au moins un des éléments suivants :
un élément de surface (34) perméable aux gaz et au moins souple à la flexion, destiné à être posé sur l'ensemble constitué par le profilé support (4) et l'élément de couche (6) ;
une feuille (36) destinée à être placée sur l'ensemble constitué par le profilé support (4) et l'élément de couche pour augmenter les propriétés de glissement de la membrane (24) ; et
au moins un poinçon de pression (42, 43) à appliquer sur l'ensemble constitué du profilé support (4) et de l'élément de couche (6), une face inférieure (46), tournée vers l'ensemble, du au moins un poinçon de pression (42, 43) comprenant une surface plus petite qu'une surface sur une face supérieure (44), tournée vers l'élément de compactage (24), du au moins un poinçon de pression (42, 43).

10. Système (2, 48) selon la revendication 9,
dans lequel le logement (12) étant en forme de cuvette et comprenant un support (18) pour maintenir le profilé support (4) en position fixe.

11. Système (2, 48) selon la revendication 9 ou 10,
dans lequel l'élément de compactage (24) comprend une membrane imperméable aux gaz (24) qui recouvre le logement (12) pour créer un espace intermédiaire étanche aux gaz (26) entre le logement (12) et la membrane (24), et
dans lequel le dispositif d'entraînement (28, 54) comprenant une pompe à fluide (28) qui alimente l'espace intermédiaire (26) avec une dépression, de sorte que la membrane (24) est pressée sur l'élément en couches (6) et le profilé de support (4).

12. Système (2, 48) selon la revendication 9 ou 10,
dans lequel le logement (12) comprenant un couvercle (50) qui peut être placé sur un côté de la membrane (24) opposé au profilé support (4), et
dans lequel le dispositif d'entraînement (28, 54) étant conçu pour générer une surpression dans un espace intermédiaire (52) présent entre la membrane (24) et le couvercle (50).
